# EUROPEAN PATENT APPLICATION

(11) **EP 4 512 545 A1**
(43) Date of publication of application: **26.02.2025**
(21) Application number: 24177717.6
(22) Date of filing: 23.05.2024
(51) Int. Cl.: B22D 21/00, B22D 21/04, C22C 1/02, C22C 21/02, C22F 1/043

(54) **HEAT-TREATMENT-FREE DIE-CAST ALUMINUM ALLOY MATERIAL, PREPARATION METHOD THEREOF AND AUTOMOBILE STRUCTURAL MEMBER**

(30) Priority: 21.08.2023 CN 202311058388
(71) Applicant: Xiaomi EV Technology Co., Ltd., 100176 Beijing (CN)
(72) Inventor: CHEN, Xiaodu, Beijing, 100176 (CN); ZHANG, Xingmeng, Beijing, 100176 (CN)
(74) Representative: Stöckeler, Ferdinand

(57) **Abstract**

A heat-treatment-free die-cast aluminum alloy material includes: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, based on a total weight of the die-cast aluminum alloy material.

## Description

### FIELD

The present invention relates to the technical field of die-cast aluminum alloys, and in particular to a heat-treatment-free die-cast aluminum alloy material, a preparation method thereof and an automobile structural member.

### BACKGROUND

With the increasing development of new energy vehicles, the requirements for lightweight and cost-effectiveness are getting higher and higher. Die-casting technology has ushered in a large number of applications and has raised upsurge of research and development because of its convenience, scale effect, lightweight, low cost and high efficiency. At present, the existing aluminum alloy cannot meet the current expectations for die-casting products.

Also, with the development of new energy vehicles, the e-motor industry is constantly pursuing the ultimate power density, which brings about the extreme requirements for lightweight and high power. As a result, an e-motor housing made of high-strength die-cast aluminum alloy is used. The e-motor housing with high strength and yield strength can meet requirements of light weight and high power. The high strength not only allows the local thinning, bringing the benefit of weight reduction, but also meets the strength requirement at a high power and high torque. Under the current power and torque requirements of some high-performance e-motors, the yield strength of the e-motor housing is even required to reach 210 MPa or above. Therefore, it is imperative to develop a high-strength aluminum alloy for e-motor housing. In addition, there are significant differences in the performance of a tensile bar, the performance of a tensile specimen from a plate die, and the performance of a tensile specimen obtained from the e-motor housing. The performances of the existing materials for the e-motor housing cannot reflect the actual performances of the e-motor, because the performances of the existing materials for the e-motor housing are not measured on a tensile specimen obtained from an actual e-motor housing, and the performances will decrease when the existing material is manufactured into an e-motor housing. In the actual development and simulation of the e-motor, more attention should be paid to the performance of the e-motor housing itself.

### SUMMARY

Objects of the present invention are to provide a heat-treatment-free die-cast aluminum alloy material, a preparation method thereof, and an automobile structural member. The die-cast aluminum alloy material is improved in strength without subjected to a heat treatment, and meets the performance requirements of an e-motor housing.

The present invention is defined by the appended claims. Preferred embodiments are included as dependent claims.

In order to achieve the above objects, a first aspect of the present invention provides a heat-treatment-free die-cast aluminum alloy material, which includes: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M, and a balance of Al, based on the total weight of the die-cast aluminum alloy material. The metal M is selected from one or both of Mn and Mo.

Optionally, the die-cast aluminum alloy material includes: 8.5 to 10 wt% of Si, 0.15 wt% or less of Fe, 2.0 to 2.5 wt% of Cu, 1.0 to 1.5 wt% of Mg, 1.5 to 2.0 wt% of Zn, 0.1 to 0.3 wt% of Ti, 0.02 to 0.07 wt% of Sr, 0.03 to 0.06 wt% of Zr, 0.3 to 0.6 wt% of a metal M, and a balance of Al, based on the total weight of the die-cast aluminum alloy material.

Optionally, the die-cast aluminum alloy material has a yield strength of 220 MPa or more, a tensile strength of 330 MPa or more, and an elongation of 2.3% or more. Preferably, the die-cast aluminum alloy material has a yield strength of 226 MPa or more, a tensile strength of 330 MPa or more, and an elongation of 2.4% or more.

A second aspect of the present invention provides a method for preparing the heat-treatment-free die-cast aluminum alloy material described in the first aspect of the present invention. The method includes: S1, smelting a mixture including 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, in a smelting furnace to obtain a first alloy melt; S2, subjecting the first alloy melt to a degassing treatment, a refining treatment and a first slagging-off treatment in a converter to obtain a second alloy melt; S3, subjecting the second alloy melt to a heat preservation treatment and a second slagging-off treatment in a holding furnace to obtain a third alloy melt; and S4, die casting the third alloy melt.

Optionally, in step S1, the smelting is performed at a smelting temperature of 730 to 750 °C for a smelting time of 1 to 10 h.

Preferably, in step S1, the smelting is performed at a melting temperature of 740 to 750 °C for a melting time of 1 to 5 h.

Optionally, in step S2, the degassing treatment is performed at a temperature of 710 to 720 °C for 10 to 15 min.

Preferably, the degassing treatment is performed at a temperature of 715 to 720 °C for 13 to 15 min.

The refining treatment includes: adding a refining agent at a temperature of 710 to 720 °C under stirring for refining, followed by standing for 10 to 20 min.

The first slagging-off treatment includes removing a dross by using a slagging-off tool.

Optionally, in step S3, the heat preservation treatment is performed at a heat preservation temperature of 650 to 670 °C for a heat preservation time of 0.1 to 10 h.

Preferably, the heat preservation treatment is performed at a heat preservation temperature of 658 to 662 °C for a heat preservation time of 0.1 to 0.5 h.

The second slagging-off treatment includes removing a dross by using a slagging-off tool.

Optionally, conditions for the casting treatment of step S4 include: a casting pressure of 60 MPa or more, a high speed of 4.5 m/s or more, a vacuum degree of 60 mbar or less, a temperature of an aluminum melt of 650 to 670 °C, a temperature of a mold after spraying of 150 °C or more, and an injection delay time of 1 s or less.

Preferably, the conditions for the casting treatment of step S4 include: a casting pressure of 60 to 80 MPa, a high speed of 4.5±0.1 m/s, a vacuum degree of 40 to 50 mbar, a temperature of an aluminum melt of 658 to 662 °C, a temperature of a mold after spraying of 150 to 160 °C, and an injection delay time of 1±0.1 s.

Optionally, the method further includes: carrying out a first component detection on the first alloy melt obtained in step S1; and subjecting the first alloy melt to step S2 when a result of the first component detection meets a first condition; carrying out a second component detection on the second alloy melt obtained in step S2; and subjecting the second alloy melt to step S3 when a result of the second component detection meets a second condition; and carrying out a third component detection on the third alloy melt obtained in step S3; and subjecting the third alloy melt to step S4 when a result of the third component detection meets a third condition.

Optionally, the first condition, the second condition and the third condition each independently include that: the composition of an alloy melt includes: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al.

A third aspect of the present invention provides an automobile structural member, which includes a die-cast aluminum alloy material. The die-cast aluminum alloy material is the heat-treatment-free die-cast aluminum alloy material described in the first aspect of the present invention or the heat-treatment-free die-cast aluminum alloy material prepared by the method described in the second aspect of the present invention.

The present invention provides a heat-treatment-free die-cast aluminum alloy material, a preparation method thereof, and an automobile structural member. The aluminum alloy material has a high strength without subjected to a heat treatment, and with the increase of the natural aging time, the strength will be further improved until it tends to be stable, thereby avoiding the disadvantages caused by the introduction of the heat treatment, such as reduced production efficiency, increased production cost, extra carbon emission, and the like. The alloy material has high tensile strength, yield strength and elongation, which enables the e-motor to achieve the goal of extreme power and torque. In addition, the performances of the die-cast aluminum alloy material according to the present invention are all measured on tensile specimens sampled from the e-motor housing, and thus can meet the performance requirements of the e-motor housing. The corrosion resistance of the die-cast aluminum alloy material is improved to a certain extent, which enables the e-motor to be more suitable for the application environment in chassis.

Other features and advantages of the present invention will be described in detail below.

### BRIEF DESCRIPTION OF THE DRAWINGS

The accompanying drawings are provided to facilitate a further understanding of the present invention and constitute a part of the specification, serve to explain the present invention together with the following described embodiments, but do not constitute a limitation on the present invention.
Fig. 1 shows a schematic process flowchart of a method for preparing a heat-treatment-free die-cast aluminum alloy material according to embodiments of the present invention; and
Fig. 2 shows a motor housing and a sampling position for obtaining a tensile specimen of the heat-treatment-free die-cast aluminum alloy according to embodiments of the present invention.

### Reference sign:

1 - sampling position where a tensile specimen is obtained

### DETAILED DESCRIPTION

Hereinafter, specific embodiments of the present invention will be described in detail with reference to the accompanying drawings. It should be understood that the specific embodiments described herein are used to illustrate and explain the present invention, and are not used to limit the present invention.

The inventors of the present invention found that the existing high-strength aluminum alloy material is developed based on performances of tensile bars, but such performance indexes have a low reference value for the development of an actual product, and cannot represent the performance requirements required by real application conditions. Moreover, the performance of a tensile specimen sampled from an actual product will be further reduced as compared with that of a tensile bar, and the amount of reduction depends on the sampling position on the housing and the process parameters, so the performances of a tensile bar cannot be used as an input for product development. Aiming at the problems that the strength performance of the existing aluminum alloy is low, and there is no corresponding performance data measured on an actual product available, the present invention develops a high-strength die-cast aluminum alloy by controlling contents of various elements especially like Fe (iron), Cu (copper), Mg (magnesium), Zn (zinc) in the alloy, and adding fine grain reinforcing elements such as Zr (zirconium), Ti (titanium), Sr (strontium), Mn (manganese) and Mo (molybdenum). The die-cast aluminum alloy according to the present invention achieves high yield strength, tensile strength and elongation when measured on a tensile specimen sampled from an e-motor housing, without subjecting a heat treatment, and achieves the goal of extreme power and torque of the e-motor.

The first aspect of the present invention provides a heat-treatment-free die-cast aluminum alloy material, which includes: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, based on a total weight of the die-cast aluminum alloy material.

In an embodiment, the content of Mn in the die-cast aluminum alloy material is in a range of 0.2 to 0.7 wt%, and the content of Mo in the die-cast aluminum alloy material is in a range of 0.02 to 0.1 wt%.

The present invention provides a heat-treatment-free die-cast aluminum alloy material, which achieves a high strength without subjected to a heat treatment, and with the increase of the natural aging time, the strength will be further improved until it tends to be stable, thereby avoiding the disadvantages caused by the introduction of the heat treatment, such as reduced production efficiency, increased production cost, extra carbon emission, and the like. The alloy material has high tensile strength, yield strength and elongation, which enables the e-motor to achieve the goal of extreme power and torque. In addition, the performances of the die-cast aluminum alloy material according to the present invention are all measured on tensile specimens sampled from the e-motor housing, and thus can meet the performance requirements of the e-motor housing. Moreover, the corrosion resistance of the die-cast aluminum alloy material is improved to a certain extent, which enables the e-motor to be more suitable for the application environment in chassis.

In an embodiment, some impurities, such as Cr (chrome), Ni (nickel), Sn (stannum), Pb (lead), etc., are inevitably introduced in a casting process of the alloy, and a total amount of impurities in the die-cast aluminum alloy material according to embodiments of the present invention is below 0.25 wt%.

In the present invention, the content of Si in the die-cast aluminum alloy material is between 8.5 and 11.0 wt%, and the optimal value is about 9 wt%. In this range, the die-cast aluminum alloy material not only can achieve a higher level of strength and a certain elongation, but also enables a motor housing to have an impact resistant ability.

The content of Fe in the die-cast aluminum alloy material according to embodiments of the present invention is controlled within 0.2 wt%, so that higher mechanical performances are realized, and the problem of reduction of elongation caused by the pursuit of extremely high strength is eliminated.

The content of Cu in the die-cast aluminum alloy material according to embodiments of the present invention is controlled in a range of 1.8 to 3.0 wt%, which makes the corrosion resistance of the die-cast aluminum alloy material according to the present invention superior to conventional alloys A380 and ADC12.

The content of Mg in the aluminum alloy material according to embodiments of the present invention is in a range of 1.0 to 2.0 wt%, which enables the strength of the aluminum alloy material to be improved as much as possible while ensuring that the elongation meets the basic requirement of the motor housing.

The content of Zn in the aluminum alloy material according to embodiments of the present invention is in a range of 1.0 to 2.0 wt%, which enables the aluminum alloy material to have good casting performance and mechanical properties, and can avoid the tendency of hot cracking of the alloy as much as possible to ensure the corrosion resistance of the alloy material.

The presence of Mn in the aluminum alloy can reduce the harmful effects of Fe, because Mn can change the flaky or needle-like crystal structure of Fe in the alloy into fine and dense crystal structure. Further, the content of Fe in the alloy of the present invention is low, which is not conducive to demoulding, but the addition of Mn can change this phenomenon. However, high content of Mn in the alloy will cause segregation. In view of above, the content of Mn in the aluminum alloy according to embodiments of the present invention is controlled in the range of 0.2 to 0.7 wt%, which not only can reduce the harmful effects of Fe in the alloy material, but also to avoid the segregation phenomenon.

The content of Zr in the aluminum alloy according to embodiments of the present invention is in the range of 0.03 to 0.06 wt%, so that (Al, Si)₃Zr particles can be easily formed in the alloy as heterogeneous nucleation points of α-Al, and the grain is refined. As a result, the strength and elongation of the alloy are improved simultaneously.

The content of Ti in the aluminum alloy according to embodiments of the present invention is controlled to be 0.1 to 0.3 wt%, which can play the fine grain strengthening effect.

The content of Sr in the aluminum alloy material according to embodiments of the present invention is in the range of 0.02 to 0.07 wt%, which enables the eutectic silicon to transform from needlelike to fibrous.

The content of Mo in the alloy material according to embodiments of the present invention is controlled in the range of 0.02 to 0.1 wt%. Mn and Mo elements mainly inhibit the generation of needle-like iron-rich phase, so that less harmful α-Al(Fe, Mn)Si or α-Al(Fe, Mo)Si phases are generated in the alloy, and these fine dispersed phases can improve the strength of the alloy.

In a preferred embodiment, the die-cast aluminum alloy material includes: 8.5 to 10 wt% of Si, 0.15 wt% or less of Fe, 2.0 to 2.5 wt% of Cu, 1.0 to 1.5 wt% of Mg, 1.5 to 2.0 wt% of Zn, 0.1 to 0.3 wt% of Ti, 0.02 to 0.07 wt% of Sr, 0.03 to 0.06 wt% of Zr, 0.3 to 0.6 wt% of the metal M and a balance of Al, based on the total weight of the die-cast aluminum alloy material. The proportion provided by this embodiment is beneficial to further improving the performances of die-cast aluminum alloy material.

In an embodiment, the content of Mn in the die-cast aluminum alloy material is in the range of 0.3 to 0.6 wt%, and the content of Mo is in the range of 0.02 to 0.03 wt%.

In an embodiment, the die-cast aluminum alloy material has a yield strength of 220 MPa or more, a tensile strength of 330 MPa or more, and an elongation of 2.3% or more.

Preferably, the die-cast aluminum alloy material has a yield strength of 226 MPa or more, a tensile strength of 330 MPa or more, and an elongation of 2.4% or more. The performances of the die-cast aluminum alloy material according to embodiments of the present invention can meet the goal of extreme power and torque of the e-motor.

In the present invention, the performances of the die-cast aluminum alloy material according to embodiments of the present invention refer to those measured through tensile tests on standard tensile specimens that are taken from practically used parts and meet measuring requirements. The tensile specimen is sampled by the following method: firstly, a part is obtained through a die casting process; an area conforming to the tensile specimen is marked; a tensile specimen block previously marked is cut from the part, and then a standard tensile specimen is obtained from the above tensile specimen block by wire cutting with a slow wire travelling speed.

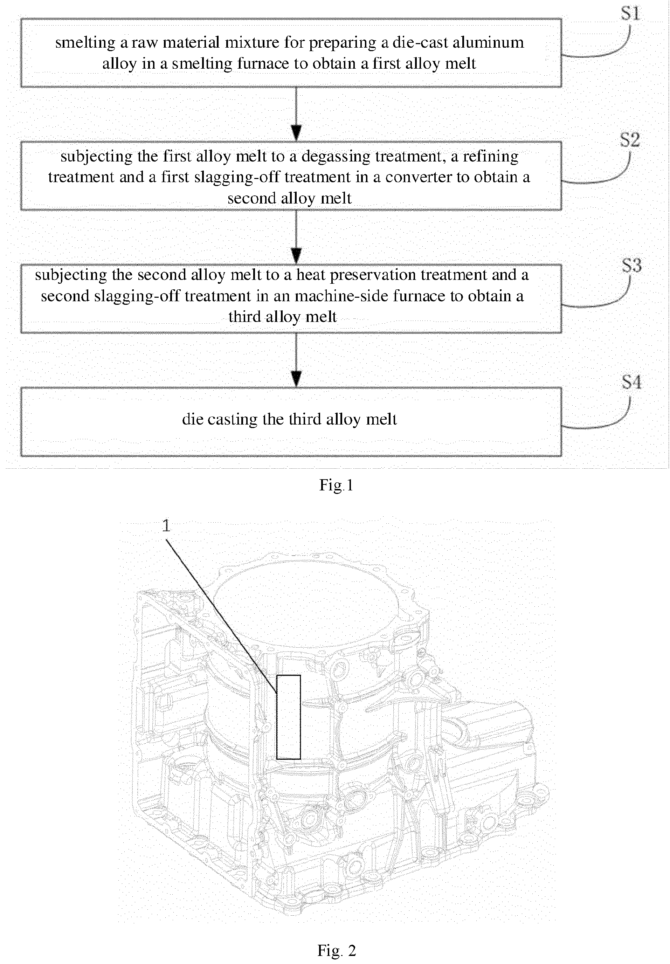

The second aspect of the present invention provides a method for preparing the heat-treatment-free die-cast aluminum alloy material described in the first aspect of the present invention. Referring to Fig. 1, the method includes the following steps.

At S1, a mixture including 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, is smelted in a smelting furnace to obtain a first alloy melt.

At S2, the first alloy melt is subjected to a degassing treatment, a refining treatment and a first slagging-off treatment in a converter to obtain a second alloy melt.

At S3, the second alloy melt is subjected to a heat preservation treatment and a second slagging-off treatment in a holding furnace to obtain a third alloy melt.

At S4, the third alloy melt is die cast.

The method according to embodiments of the present invention can prepare the high-strength aluminum alloy material without a heat treatment, and avoids the disadvantages caused by the introduction of the heat treatment, such as reduced production efficiency, increased production cost, extra carbon emission, and the like.

The alloy material prepared with the method in the present invention is a low-iron alloy, and it is necessary to use a smelting equipment (including the smelting furnace, the converter, the holding furnace, etc.) to smelt alloy ingots (or perform a furnace washing operation, with a requirement that the component detection is qualified). The smelting equipment is a conventional device in the related art.

In a preferred embodiment, the mixture includes: 8.5 to 10 wt% of Si, 0.15 wt% or less of Fe, 2.0 to 2.5 wt% of Cu, 1.0 to 1.5 wt% of Mg, 1.5 to 2.0 wt% of Zn, 0.1 to 0.3 wt% of Ti, 0.02 to 0.07 wt% of Sr, 0.03 to 0.06 wt% of Zr, 0.3 to 0.6 wt% of the metal M and a balance of Al.

In an embodiment, in step S1, the smelting is performed at a smelting temperature of 730 to 750 °C for a smelting time of 1 to 10 h. Preferably, in step S1, the smelting is performed at a melting temperature of 740 to 750 °C for a melting time of 1 to 5 h. Optionally, an atmosphere in the smelting furnace may be a protective atmosphere (such as nitrogen) or air.

In an embodiment, in step S2, the degassing treatment is performed at a temperature of 710 to 720 °C for 10 to 15 min.

Preferably, the degassing treatment is performed at a temperature of 715 to 720 °C for 13 to 15 min.

The refining treatment includes: adding a refining agent at a temperature of 710 to 720 °C under stirring for refining, followed by standing for 10 to 20 min. The refining agent adopts those commonly used in the related art and is commercially available.

The first slagging-off treatment includes removing a dross by using a slagging-off tool.

In an embodiment, in step S3, the heat preservation treatment is performed at a heat preservation temperature of 650 to 670 °C for a heat preservation time of 0.1 to 10 h.

Preferably, the heat preservation treatment is performed at a heat preservation temperature of 658 to 662 °C for a heat preservation time of 0.1 to 0.5 h.

The second slagging-off treatment includes removing a dross by using a slagging-off tool. Optionally, an atmosphere for the heat preservation treatment includes a protective atmosphere (such as nitrogen) or air.

In an embodiment, conditions for the casting treatment of step S4 include: a casting pressure of 60 MPa or more, a high speed of 4.5 m/s or more, a vacuum degree of 60 mbar or less, a temperature of an aluminum melt of 650 to 670 °C, a temperature of a mold after spraying of 150 °C or more, and an injection delay time of 1 s or less.

Preferably, the conditions for the casting treatment of step S4 include: a casting pressure of 60 to 80 MPa, a high speed of 4.5±0.1 m/s, a vacuum degree of 40 to 50 mbar, a temperature of an aluminum melt of 658 to 662 °C, a temperature of a mold after spraying of 150 to 160 °C, and an injection delay time of 1±0.1 s. The press machine used in the present invention has a tonnage of 3000 T or above.

In an embodiment, the method further includes: carrying out a first component detection on the first alloy melt obtained in step S1; and subjecting the first alloy melt to step S2 when a result of the first component detection meets a first condition; carrying out a second component detection on the second alloy melt obtained in step S2; and subjecting the second alloy melt to step S3 when a result of the second component detection meets a second condition; and carrying out a third component detection on the third alloy melt obtained in step S3; and subjecting the third alloy melt to step S4 when a result of the third component detection meets a third condition.

Optionally, the first condition, the second condition and the third condition each independently include that: the composition of an alloy melt includes: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al. In the preparation process of the present invention, the composition of the alloy melt obtained in each step is detected, which can ensure that the composition of the final alloy material meets the requirements.

The third aspect of the present invention provides an automobile structural member, which includes a die-cast aluminum alloy material. The die-cast aluminum alloy material is a heat-treatment-free die-cast aluminum alloy material described in the first aspect of the present invention or a heat-treatment-free die-cast aluminum alloy material prepared by the method described in the second aspect of the present invention.

Further, the automobile structural member include parts which are formed by die casting and have requirements of high strength and high yield strength themselves, including but not limited to e-motor parts such as a motor housing, a motor end cover, and an decelerator housing. As shown in Fig. 2, the automobile structural member shown in Fig. 2 is a motor housing, and a sampling position 1 is on the motor housing.

The present invention will be further explained in detail with reference to examples. The raw materials used in the examples are all commercially available.

### Example 1

In this example, an aluminum alloy material was prepared by using the raw material composition listed in Table 1 under the following conditions.

The alloy is a low-iron alloy, so a special smelting equipment (including a smelting furnace, a converter, a holding furnace, etc.) was used to smelt alloy ingots (perform a furnace washing operation, with a requirement that the component detection is qualified).

(1) The prepared alloy ingots were placed into the smelting furnace and fully smelted under a smelting temperature of 750 °C for a smelting time of 3 h.

The obtained melt was detected to ensure that its composition meets the requirement. Specifically, a small amount of melt was taken out of the smelting furnace and solidified, and then was detected using an optical emission spectroscopy (OES) to determine that its composition meets the requirement. Then, the melt was subjected to a next operation.

(2) The alloy melt obtained in step (1) was transferred to the converter, and subjected to a degassing treatment at a temperature of 720 °C for 15 min, to a refining treatment by adding a refining agent at 720 °C under evenly and slightly stirring for refining, followed by standing for 15 min, and then subjected to a slagging-off treatment using a slagging-off tool to remove the dross.

The obtained alloy melt was detected to ensure that its composition meets the requirement, and then the melt was subjected to a next operation.

(3) The alloy melt obtained in step (2) was transferred from the converter to the holding furnace for a heat preservation treatment and a second slagging-off treatment. The heat preservation treatment was performed at 660 °C for 0.1 h.

The obtained alloy melt was detected to ensure that its composition meets the requirement, and then the melt was subjected to a next operation.

(4) The alloy melt obtained in step (3) was die cast with die-casting parameters shown in Table 2 below.

### Examples 2 to 5

Examples 2 to 5 were performed with the same method as Example 1, but the difference from Example 1 was that a recipe of raw materials used in Examples 2 to 5 (listed in Table 1) for preparing the aluminum alloy was different from that used in Example 1.

### Example 6

In this example, the same recipe of raw materials as used in Example 1 was used for preparing the aluminum alloy, but with difference process conditions from Example 1, as described below.

(1) The prepared alloy ingots were placed into the smelting furnace and fully smelted under a smelting temperature of 730 °C for a smelting time of 10 h.

The obtained melt was detected to ensure that its composition meets the requirement, and then the melt was subjected to a next operation.

(2) The alloy melt obtained in step (1) was transferred to the converter, and subjected to a degassing treatment at a temperature of 710 °C for 10 min, to a refining treatment by adding a refining agent at 720 °C under evenly and slightly stirring for refining, followed by standing for 15 min, and then subjected to a slagging-off treatment using a slagging-off tool to remove the dross.

The obtained alloy melt was detected to ensure that its composition meets the requirement, and then the melt was subjected to a next operation.

(3) The alloy melt obtained in step (2) was transferred from the converter to the holding furnace for a heat preservation treatment and a second slagging-off treatment. The heat preservation treatment was performed at 670 °C for 10 h.

The obtained alloy melt was detected to ensure that its composition meets the requirement, and then the melt was subjected to a next operation.

(4) The alloy melt obtained in step (3) was die cast with die-casting parameters shown in Table 3 below.

### Example 7

Example 7 was performed with the same method as Example 1, but the difference from Example 1 was that a recipe of raw materials used in Example 7 (listed in Table 1) for preparing the aluminum alloy was different from that used in Example 1.

### Comparative example 1

Comparative example 1 was performed with the same method as Example 1, but the difference from Example 1 was that a recipe of raw materials used in Comparative example 1 (listed in Table 1) for preparing the aluminum alloy was different from that used in Example 1.

### Comparative example 2

Comparative example 2 was performed with the same method as Example 1, but the difference from Example 1 was that a recipe of raw materials used in Comparative example 2 (listed in Table 1) for preparing the aluminum alloy was different from that used in Example 1.

### Comparative example 3

The die-cast aluminum alloy material was prepared according to the method disclosed in Example 1 of CN115961186A.

### Comparative example 4

The aluminum alloy material was prepared according to the method disclosed in Example 3 of CN104831129A.

### Comparative example 5

The aluminum alloy material was prepared according to the method disclosed in Example 6 of CN105463269A.

### Comparative example 6

The aluminum alloy material was prepared according to the method disclosed in Example 1 of CN105316542A.

### Comparative example 7

The aluminum alloy material was prepared according to the method disclosed in Example 1 of CN107829000A.

**Table 1**

| | Si/ wt% | Fe/ wt% | Cu/ wt% | Mn/ wt% | Mg/ wt% | Zn/ wt% | Ti/ wt% | Sr/ wt% | Zr/ wt% | Mo/ wt% | Mn+ Mo/ wt% |
|---|---|---|---|---|---|---|---|---|---|---|---|
| E1 | 8.887 | 0.111 | 1.924 | 0.558 | 1.184 | 1.443 | 0.102 | 0.033 | 0.042 | 0.025 | 0.583 |
| E2 | 9.160 | 0.134 | 2.002 | 0.563 | 1.184 | 1.596 | 0.108 | 0.057 | 0.043 | 0.028 | 0.591 |
| E3 | 9.458 | 0.127 | 2.150 | 0.511 | 1.254 | 1.723 | 0.109 | 0.049 | 0.044 | 0.022 | 0.533 |
| E4 | 9.508 | 0.137 | 2.177 | 0.554 | 1.229 | 1.651 | 0.116 | 0.064 | 0.046 | 0.021 | 0.575 |
| E5 | 9.099 | 0.134 | 2.009 | 0.555 | 1.184 | 1.591 | 0.112 | 0.059 | 0.042 | 0.026 | 0.581 |
| E7 | 10.503 | 0.169 | 2.603 | 0.614 | 1.045 | 1.481 | 0.134 | 0.033 | 0.053 | 0.021 | 0.635 |
| CE1 | 10.937 | 0.894 | 1.857 | 0.198 | 0.180 | 0.872 | 0.054 | 0.018 | / | / | 0.198 |
| CE2 | 8.228 | 0.085 | 3.114 | 0.712 | 0.606 | 2.097 | 0.098 | 0.031 | 0.023 | 0.015 | 0.727 |

**Table 2**

| Parameters | Value | Unit |
|---|---|---|
| Tonnage of press machine | 3000 | Ton |
| Casting pressure | 75 | MPa |
| High speed | 4.5 | m/s |
| Vacuum degree | 40∼50 | mbar |
| Temperature of aluminum melt | 660 | °C |
| Temperature of mold after spraying | 150 | °C |
| Injection delay time | 1 | s |

**Table 3**

| Parameters | Value | Unit |
|---|---|---|
| Tonnage of press machine | 3000 | Ton |
| Casting pressure | 60 | MPa |
| High speed | 4.5 | m/s |
| Vacuum degree | 55-60 | mbar |
| Temperature of aluminum melt | 670 | °C |
| Temperature of mold after spraying | 150 | °C |
| Injection delay time | 1 | s |

### Test example

In the test example, mechanical performances were tested on tensile specimens obtained from products prepared in the above examples and comparative examples.

The tensile specimen was sampled by the following method: firstly, a part was obtained through the die casting process; an area conforming to the tensile specimen was marked; a tensile specimen block previously marked was cut from the part, and then a standard tensile specimen was obtained from the above tensile specimen block by wire cutting with a slow wire travelling speed. The tensile specimen has a specification in conformity with a small-scale test according to ASTM E8, and the thickness of the tensile specimen is the actual thickness of the part, which is about 5 to 6 mm.

The test methods of the yield strength, the tensile strength and the elongation of tensile specimens refer to Standard GB/T 228.1-2021, tensile test for metallic materials, part 1: room temperature test method. The results are listed in Table 4 below.

**Table 4**

| Ex No. | Yield strength /Mpa | Tensile strength /Mpa | Elongation /% |
|---|---|---|---|
| E1 | 226 | 330 | 2.9 |
| E2 | 234 | 353 | 3.4 |
| E3 | 229 | 344 | 2.6 |
| E4 | 227 | 342 | 2.4 |
| E5 | 227 | 344 | 2.7 |
| E6 | 203 | 319 | 2.5 |
| E7 | 221 | 333 | 2.4 |
| CE1 | 154 | 226 | 2.0 |
| CE2 | 181 | 280 | 1.9 |
| CE3 | 193 | 304 | 3.0 |
| CE4 | 176 | 306 | 7.7 |
| CE5 | 157 | 268 | 2.4 |
| CE6 | 137 | 211 | 6.8 |
| CE7 | 165 | 278 | 4.7 |

According to the data shown in Table 4 above, the following conclusions can be obtained.

By comparing Examples 1-6 (E1-E6 for short) with Comparative Examples 1-2 (CE1-CE2 for short), it can be seen that the yield strength, the tensile strength and the elongation of the heat-treatment-free die-cast aluminum alloy materials prepared in Examples 1-6 of the present invention are all better than that of the Comparative Examples 1-2.

By comparing E1-E6 with CE2-CE7, it can be seen that the heat-treatment-free die-cast aluminum alloy materials prepared in E1-E6 by the method according to embodiments of the present invention have higher yield strength and tensile strength on the basis of ensuring a higher elongation.

By comparing E1 with E6, it can be seen that the aluminum alloy material prepared in Example 1 according to the optimized process conditions of the present invention achieves higher yield strength, tensile strength and elongation than that of E6.

By comparing E1-E5 with E7, it can be seen that the aluminum alloy materials with optimized component ranges prepared in E1-E5 achieve higher yield strength, tensile strength and elongation than that of E7.

Some embodiments of the present invention have been described in detail with reference to the attached drawings, but the present invention is not limited to the specific details in the above embodiments. Within the technical concept of the present invention, various simple modifications can be made to the technical solution of the present invention, and these simple variants all belong to the protection scope of the present invention.

In addition, it should be noted that the specific technical features described in the above-mentioned specific embodiments can be combined in any suitable way without contradiction, and in order to avoid unnecessary repetition, various possible combinations are not explained separately in the present invention.

In addition, various embodiments of the present invention can also be combined, which should also be regarded as the contents disclosed in the present invention.

## Claims

1. A heat-treatment-free die-cast aluminum alloy material, comprising:
8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, based on a total weight of the die-cast aluminum alloy material.

2. The die-cast aluminum alloy material according to claim 1, comprising one or both of: 0.2 to 0.7 wt% of Mn; and 0.02 to 0.1 wt% of Mo.

3. The die-cast aluminum alloy material according to claim 1 or 2, comprising: 8.5 to 10 wt% of Si, 0.15 wt% or less of Fe, 2.0 to 2.5 wt% of Cu, 1.0 to 1.5 wt% of Mg, 1.5 to 2.0 wt% of Zn, 0.1 to 0.3 wt% of Ti, 0.02 to 0.07 wt% of Sr, 0.03 to 0.06 wt% of Zr, 0.3 to 0.6 wt% of the metal M, and a balance of Al, based on the total weight of the die-cast aluminum alloy material.

4. The die-cast aluminum alloy material according to claim 3, comprising one or both of: 0.3 to 0.6 wt% of Mn; and 0.02 to 0.03 wt% of Mo.

5. The die-cast aluminum alloy material according to any one of claims 1 to 4, wherein the die-cast aluminum alloy material has a yield strength of 220 MPa or more, a tensile strength of 330 MPa or more, and an elongation of 2.3% or more.

6. The die-cast aluminum alloy material according to claim 5, wherein the die-cast aluminum alloy material has a yield strength of 226 MPa or more, a tensile strength of 330 MPa or more, and an elongation of 2.4% or more.

7. A method for preparing the heat-treatment-free die-cast aluminum alloy material according to any one of claims 1 to 6, comprising:
S1, smelting a mixture comprising 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al, in a smelting furnace to obtain a first alloy melt;
S2, subjecting the first alloy melt to a degassing treatment, a refining treatment and a first slagging-off treatment in a converter to obtain a second alloy melt;
S3, subjecting the second alloy melt to a heat preservation treatment and a second slagging-off treatment in a holding furnace to obtain a third alloy melt; and
S4, die casting the third alloy melt.

8. The method of claim 7, wherein the mixture in S1 comprises 8.5 to 10 wt% of Si, 0.15 wt% or less of Fe, 2.0 to 2.5 wt% of Cu, 1.0 to 1.5 wt% of Mg, 1.5 to 2.0 wt% of Zn, 0.1 to 0.3 wt% of Ti, 0.02 to 0.07 wt% of Sr, 0.03 to 0.06 wt% of Zr, 0.3 to 0.6 wt% of the metal M, and a balance of Al.

9. The method according to claim 7 or 8, wherein in step S1, the smelting is performed at a smelting temperature of 730 to 750 °C for a smelting time of 1 to 10 h.

10. The method according to claim 9, wherein the smelting is performed at a melting temperature of 740 to 750 °C for a melting time of 1 to 5 h.

11. The method according to any one of claims 7 to 10, wherein in step S2, the degassing treatment is performed at a temperature of 710 to 720 °C for 10 to 15 min,
preferably, the degassing treatment is performed at a temperature of 715 to 720 °C for 13 to 15 min;
the refining treatment comprises: adding a refining agent at a temperature of 710 to 720 °C under stirring for refining, followed by standing for 10 to 20 min; and
the first slagging-off treatment comprises removing a dross by using a slagging-off tool.

12. The method according to any one of claims 7 to 11, wherein in step S3, the heat preservation treatment is performed at a heat preservation temperature of 650 to 670 °C for a heat preservation time of 0.1 to 10 h;
preferably, the heat preservation treatment is performed at a heat preservation temperature of 658 to 662 °C for a heat preservation time of 0.1 to 0.5 h; and
the second slagging-off treatment comprises removing a dross by using a slagging-off tool.

13. The method according to any one of claims 7 to 12, wherein conditions for the casting treatment of step S4 comprise: a casting pressure of 60 MPa or more, a high speed of 4.5 m/s or more, a vacuum degree of 60 mbar or less, a temperature of an aluminum melt of 650 to 670 °C, a temperature of a mold after spraying of 150 °C or more, and an injection delay time of 1 s or less;
preferably, the conditions for the casting treatment of step S4 comprise: a casting pressure of 60 to 80 MPa, a high speed of 4.5±0.1 m/s, a vacuum degree of 40 to 50 mbar, a temperature of an aluminum melt of 658 to 662 °C, a temperature of a mold after spraying of 150 to 160 °C, and an injection delay time of 1±0.1 s.

14. The method according to any one of claims 7 to 13, further comprising:
carrying out a first component detection on the first alloy melt obtained in step S1; and subjecting the first alloy melt to step S2 when a result of the first component detection meets a first condition;
carrying out a second component detection on the second alloy melt obtained in step S2; and subjecting the second alloy melt to step S3 when a result of the second component detection meets a second condition; and
carrying out a third component detection on the third alloy melt obtained in step S3; and subjecting the third alloy melt to step S4 when a result of the third component detection meets a third condition;
optionally, the first condition, the second condition and the third condition each independently comprise: an alloy melt comprising: 8.5 to 11.0 wt% of Si, 0.2 wt% or less of Fe, 1.8 to 3.0 wt% of Cu, 1.0 to 2.0 wt% of Mg, 1.0 to 2.0 wt% of Zn, 0.1 to 0.3 wt% of Ti, 0.02 to 0.07 wt% of Sr, 0.03 to 0.06 wt% of Zr, 0.2 to 0.8 wt% of a metal M selected from one or both of Mn and Mo, and a balance of Al.

15. An automobile structural member, comprising the die-cast aluminum alloy material according to any one of claims 1 to 6 or the die-cast aluminum alloy material prepared by the method according to any one of claims 7 to 14.
